# EUROPÄISCHE PATENTSCHRIFT

(11) **EP 1 819 935 B1**
(45) Veröffentlichungstag und Bekanntmachung des Hinweises auf die Patenterteilung: **15.04.2009**
(21) Anmeldenummer: 05811128.7
(22) Anmeldetag: 25.11.2005
(51) Int. Cl.: F16D 65/14, F16D 65/56, F16C 17/08

(54) **BREMSSATTEL EINER SCHEIBENBREMSE**
CALIPER FOR A DISK BRAKE
ETRIER DE FREIN POUR FREIN A DISQUE

(30) Priorität: 26.11.2004 DE 102004057276; 23.11.2005 DE 102005056166
(43) Veröffentlichungstag der Anmeldung: 22.08.2007
(60) Teilanmeldung: 09154173.0
(73) Patentinhaber: Continental Teves AG & Co. oHG, 60488 Frankfurt am Main (DE)
(72) Erfinder: PETRI, Ralph, 65843 Sulzbach/Ts. (DE); WEILER, Rolf, 65817 Eppstein (DE); BALZ, Jürgen, 65510 Hünstetten-Oberlibbach (DE); WEIDENWEBER, Michael, 60598 Frankfurt/M (DE)
(86) Internationale Anmeldenummer: PCT/EP2005/056221
(87) Internationale Veröffentlichungsnummer: WO 2006/056598

(56) Entgegenhaltungen:
- EP-B- 0 403 635
- WO-A-03/023247
- GB-A- 2 155 126
- US-A1- 2002 041 123

## Beschreibung

Die Erfindung betrifft einen Bremssattel einer Scheibenbremse, umfassend ein Gehäuse mit einer Bohrung, in der ein Kolben axial verschiebbar angeordnet ist, und eine Welle zur Betätigung, die drehbar und axial verschiebbar gelagert ist und mit einem Wellenende eine Gehäuseöffnung durchgreift, und zwei gegeneinander verdrehbare Rampenelemente, von denen ein Rampenelement drehfest mit dem Gehäuse und ein Rampenelement drehfest mit der Welle verbunden ist, und eine Nachstellvorrichtung mit einer Spindel, wobei die Nachstellvorrichtung zwischen der Welle und dem Kolben vorhanden ist, und ein zwischen Spindel und Welle wirksames Axiallager.

Aus der EP 0 403 635 B1 ist ein solcher kombinierter Bremssattel für eine Kraftfahrzeug-Scheibenbremse bekannt. Der Bremssattel umfasst ein Gehäuse mit einer Bohrung, in der ein Kolben zur Bremsbetätigung verschiebbar angeordnet ist. Für Feststellbremsungen ist im Bremsgehäuse eine Welle drehbar gelagert, wobei die Welle das Bremsgehäuse durchgreift und mit einem Rampenelement einer Rampenanordnung verbunden ist. Ein zweites zugehöriges Rampenelement ist gehäusefest angeordnet.

Aufgrund der Verbindung von Welle und Rampenanordnung, vollführt die Welle bei einer Betätigung der Feststellbremse eine Rotation und eine axiale Verschiebung. Die Welle überträgt die axiale Verschiebung auf eine Spindel einer Nachstellvorrichtung, wobei zur Entkopplung der Translation von der Rotation zwischen der Welle und der Spindel ein Axiallager vorgesehen ist. Die axiale Verschiebung wird über die Nachstellvorrichtung auf den Kolben übertragen. Zur Umwandlung der Dreh- in eine Axialbewegung muss die Spindel der Nachstellvorrichtung über eine Patrone der Nachstellvorrichtung im Gehäuse tangential abgestützt werden. Diese Verdrehsicherung ist notwendig, da das Axiallager ein restliches Drehmoment in die Spindel überträgt.

Dabei ist die Patrone drehfest mit der gehäusefesten Rampenanordnung verbunden und weist drei Längsschlitze auf, in welchen sich die Spindel mittels dreier Vorsprünge tangential abstützt. Hierbei stellt sich der Nachteil ein, dass an den Flanken der Schlitze und an den Vorsprüngen der Spindel erhebliche Flächenpressungen und Spannungsspitzen auftreten, und diese ungleichmäßige Bauteilbelastung zu einem erhöhten Verschleiß führt. Die Längsschlitze bedingen eine niedrige Stabilität der Patrone, wodurch eine dicke Wandstärke der Patrone erforderlich ist.

Zur Entlastung der Bauteile der Verdrehsicherung ist angeführt, das Axiallager zwischen Welle und Spindel als Wälz- oder Gleitlager auszuführen. Mit der Verwendung eines Wälzlagers wird ein niedriger Drehmomenteintrag in die Verdrehsicherung erreicht. Da Wälzlager kostenintensiv sind, die Bauteilkomplexität erhöhen und die jeweiligen Laufflächen gehärtet sein müssen, bedingt diese Lösung hohe Herstellungskosten, und ist deshalb als nicht praktikabel anzusehen. Dem gegenüber bringt eine Gleitlagerung mit einer axial wirksamen Gleitlagerscheibe einen Kostenvorteil mit sich, verursacht aber aufgrund der höheren Lagerreibung erhöhte Bauteilspannungen in der Nachstellvorrichtung.

Ausgehend davon ist es eine Aufgabe der Erfindung, einen gattungsgemäßen Bremssattel einer Scheibenbremse anzugeben, wobei die Bauteile auf einer beanpruchungsgerechten Konstruktion beruhen, so dass diese einer gleichmäßigen, niedrigen Belastung ohne schädliche Spannungsspitzen ausgesetzt sind.

Erfindungsgemäß wird die Aufgabe dadurch gelöst, dass auf einem Umfang der Spindel eine Verzahnung vorgesehen ist, dass formschlüssige Aufnahmemittel für die Verzahnung vorgesehen sind, und wobei diese Aufnahmemittel drehfest mit dem Gehäuse verbunden sind und die Spindel gegen Verdrehen sichern. Auf diese Weise werden die Tangentialkräfte über den gesamten Umfang der Spindel in die Aufnahme abgeleitet, wodurch sich eine niedrige Flächepressung in der Aufnahme ergibt. Weil keine Schlitze vorhanden sind, entstehen keine nachteiligen Kerbgrundspannungen.

Eine vorteilhafte Ausführung der Erfindung beinhaltet die Lehre, dass die Verzahnung und die Spindel einstückig ausgeführt sind, wodurch eine Vereinfachung der Fertigung und der Montage erreicht wird.

Es hat sich gezeigt, dass Spannungsspitzen vermieden werden können, indem die Zähne der Verzahnung zur Bildung eines sternförmigen Querschnitts gleichförmig und umlaufend auf einem Endabschnitt angebracht sind. Die gleichmäßige, sternförmige Geometrie der abstützenden Zähne bedingt, dass die Umfangskräfte gleichmäßig auf alle Zähne verteilt werden, wodurch das Niveau der Belastung niedrig gehalten wird.

Der oben genannte Vorteil der gleichmäßigen Bauteilbelastung stellt sich auch für die Aufnahmemittel ein, wenn die formschlüssigen Aufnahmemittel ein zum sternförmigen Querschnitt des Endabschnitts negatives Profil aufweisen.

In einer besonders vorteilhaften Ausgestaltung der Erfindung sind die Aufnahmemittel einstückig in einer Patrone der Nachstellvorrichtung ausgebildet. Durch die Gestaltung der Patrone als sternförmige Aufnahme wird diese versteift, anstatt wie im Stand der Technik durch die Abstützungsschlitze an innerer Formstabilität zu verlieren. Dadurch kann sowohl die Wandstärke der Patrone verringert als auch auf einen separaten Fertigungsvorgang zur Einbringung der Schlitze verzichtet werden.

Weiterhin ergeben sich bzgl. der Fertigung Vorteile, wenn die Patrone mittels spanloser Fertigungsverfahren, wie insbesondere Prägen, Tiefziehen oder Pressen hergestellt ist.

Es ist aber auch denkbar, vollständig auf die Verwendung einer Patrone zu verzichten und die Aufnahmemittel einstückig in einem Abschnitt der Bohrung auszuführen. So kann die Bauteilmenge weiter reduziert werden, indem die tangentiale Abstützung direkt durch ein geeignetes Innenprofil in der Bohrung des Gehäuses realisiert wird.

Wenn zwischen Spindel und Welle eine Gleitlagerung realisiert ist, vereinfacht eine weitere Ausgestaltung der Erfindung dessen Montage, indem eine axial wirksame Gleitlagerscheibe mindestens zwei gegenüberliegende Nasen aufweist, wobei die Nasen in das Profil der Aufnahmemittel greifen und dadurch die Gleitlagerscheibe zentriert ist.

Weitere sinnvolle Detailmerkmale der Erfindung sind dem Ausführungsbeispiel in den Figuren zu entnehmen, die im Folgenden näher erläutert werden.

In der Zeichnung zeigt
- Fig. 1: eine Schnittansicht eines Bremssattels mit Nachstell- und Betätigungsvorrichtung gemäß einer ersten Ausführungsform,
- Fig. 2: ein Teilschnitt durch den Bremssattel aus Fig. 1 entlang der Linie I-I,
- Fig. 3: eine andere Ausführungsform eines Bremssattels im Schnitt, wie in Fig. 2, wobei statt eines Wälzlagers eine Gleitlagerscheibe verwendet wird,
- Fig. 4: eine Explosionszeichnung der Ausführungsform gemäß Fig. 3, und
- Fig. 5: eine Schnittansicht eines Bremssattels mit Nachstell- und Betätigungsvorrichtung zur technischen Erläuterung.

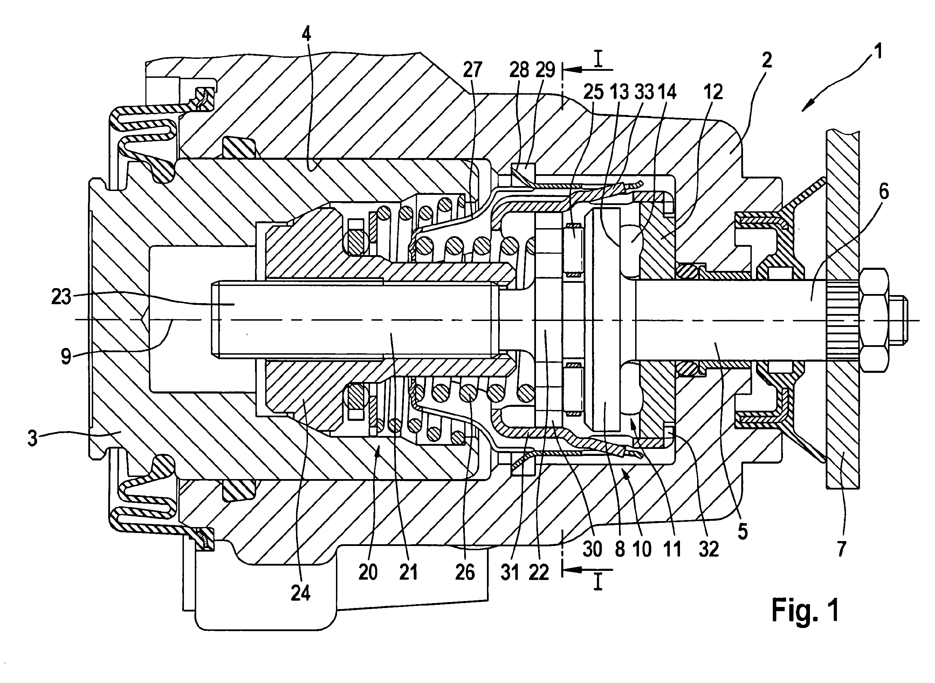

Der in Fig. 1 gezeigte Bremssattel 1 einer Kraftfahrzeug-Scheibenbremse umfasst unter anderem ein Gehäuse 2, und einen Kolben 3, der zur Bremsbetätigung in einer Bohrung 4 verschiebbar angeordnet ist. Dabei kann der Kolben 3 im Falle einer Betriebsbremsung mittels hydraulischer Druckbeaufschlagung verschoben werden. Zur Umsetzung einer Feststellbrernsung ist eine Welle 5 vorgesehen, mittels derer der Kolben 3 über eine Betätigungsvorrichtung 10 innerhalb der Bohrung 4 verschoben werden kann. Die Welle 5 greift mit einem Wellenende 6, an welchem ein Betätigungshebel 7 angebracht ist, durch eine Öffnung des Gehäuses 2. Die Betätigungsvorrichtung 10 wirkt unter Zwischenschaltung einer längenveränderlichen Nachstellvorrichtung 20 auf den Kolben 3 ein.

Die Betätigungsvorrichtung 10 umfasst eine Rampenanordnung 11, die ein gehäusefestes Rampenelement 12 sowie ein demgegenüber drehbares Rampenelement 13 aufweist. Dabei ist das Rampenelement 13 einstückig auf einem scheibenförmigen Endabschnitt 8 der Welle 5 ausgebildet. Zwischen den Rampenelementen 12,13 sind mehrere Wälzkörper 14 angeordnet, so dass die Rampenanordnung 10 bei gegenseitiger Verdrehung der Rampenelemente 12,13 eine axiale Verschiebung der Welle 5 in Betätigungsrichtung bewirkt.

Zwischen dem Endabschnitt 8 der Welle 5 und dem Kolben 3 ist eine längenveränderliche Nachstellvorrichtung 20 vorhanden, die den Hub der Rampenanordnung 11 auf den Kolben 3 überträgt und einen Verschleiß der nicht dargestellten Bremsbeläge und Bremsscheibe automatisch ausgleicht. Diese Nachstellvorrichtung 20 umfasst unter anderem eine Spindel 21 mit einem Endabschnitt 22 und eine auf den Schaft 23 der Spindel 21 aufgeschraubte Mutter 24, die am Kolben 3 anliegt. Zwischen der Stirnseite der Spindel 21 und dem Endabschnitt 8 ist ein axiales Wälzlager 25 vorgesehen. Eine Feder 26 spannt über einen Federtopf 27 die Spindel 21 gegen das Lager 25 vor. Der Federtopf 27 stützt sich mittels ausgestellter Laschen 28 axial und radial in Ausnehmungen 29 in der Bohrung 4 ab.

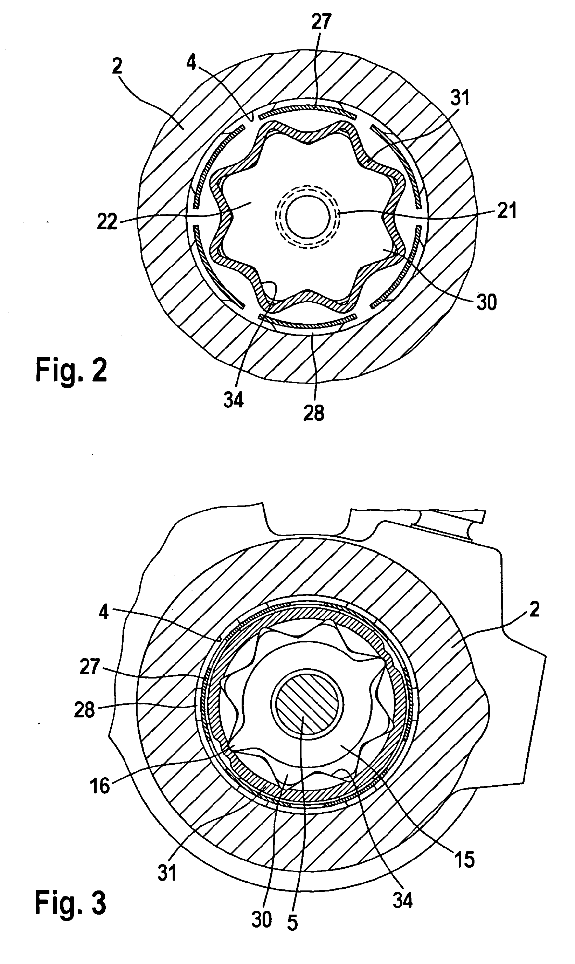

Auf dem Umfang eines Endabschnitts 22 der Spindel 21 sind mehrere regelmäßige Zähne der Verzahnung 30 angebracht, so dass der Endabschnitt 22 einen sternförmigen Querschnitt aufweist. Um die Spindel 21 gegen Verdrehen zu sichern, umgreift eine gehäusefeste Patrone 31 den Endabschnitt 22. Da die Patrone 31 zumindest teilweise ein, dem Endabschnitt 22 entsprechendes, sternförmiges Innenprofil 34 hat, greift sie in die Verzahnung 30 und bildet mit dem Endabschnitt 22 eine formschlüssige Verbindung in tangentialer Richtung (Fig. 2). Damit ist die Spindel 21 in Betätigungsrichtung verschiebbar, aber gleichzeitig verdrehsicher innerhalb der Patrone 31 und damit auch im Bremssattel 1 aufgenommen.

Zur Bildung einer einfach handhabbaren Montageeinheit sind die wesentlichen Komponenten der mechanischen Betätigungsvorrichtung 10 und der Nachstellvorrichtung 20 erfindungsgemäß zu einer Baugruppe zusammengefügt. Dies wird durch die Patrone 31 in Verbindung mit dem Federtopf 27 und dem Rampenelement 12 erreicht, wobei diese die einzelnen Komponenten der Baugruppe umschließen. Die vormontierbare Baugruppe enthält die Rampenanordnung 11, die Welle 5, das Axiallager, die Spindel 21, die Feder 26 und die Patrone 31 sowie den Federtopf 27. Dabei werden zunächst die Rampenanordnung 11, das Lager sowie die Spindel 21 in die Patrone 31 eingesetzt, die anschließend mit umgeformten Laschen 32 mit dem drehfesten Rampenelement 12 verschlossen wird, und so die Einzelteile verliersicher in der Patrone 31 gehalten werden. Danach lässt sich der Federtopf 27 zusammen mit der innen liegenden Feder 26 an ausgestellten Laschen 33 mit der Patrone 31 verrasten. Die dadurch entstandene vormontierte Montageeinheit lässt sich separat handhaben und verkrallt sich nach dem Einführen in die Bohrung 4 über weitere ausgestellte Laschen 28 des Federtopfes 27 in Ausnehmungen 29 im Bremssattel 1.

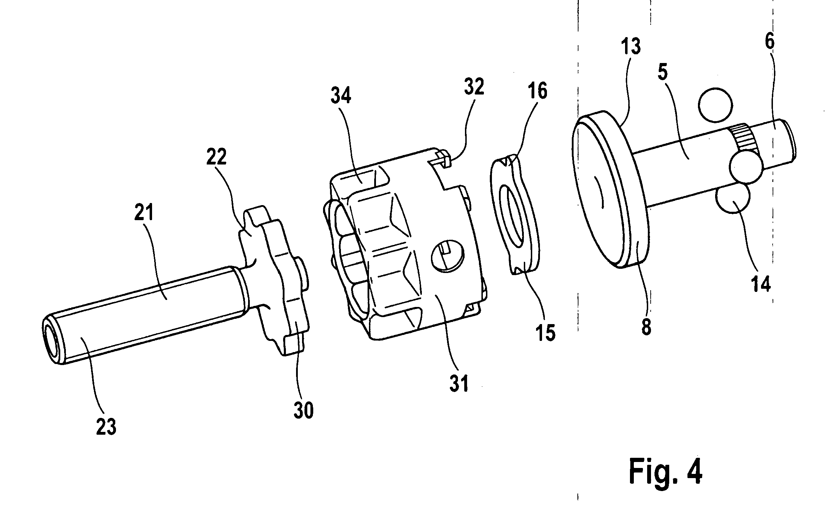

In Fig. 3 und 4 ist eine andere Ausführungsform der Erfindung dargestellt. Dabei wird zwischen dem Endabschnitt 8 der Welle 5 und der Spindel 21 anstatt des Wälzlagers 25 eine Gleitlagerscheibe 15 verwendet. Diese hat am Umfang zwei gegenüberliegende Nasen 16 ausgebildet, die in das sternförmige Profil 34 der Patrone 31 greifen. Auf diesem Weg wird die Gleitlagerscheibe 15 zentriert. Diese Ausführungsform, bei der ein Gehäusedeckel eine durchgehende Bohrung im Gehäuse abschließt, sieht eine Montageeinheit, umfassend einen Gehäusedeckel, eine Patrone, einen Federtopf mit Feder, eine Rampenanordnung, eine Spindel, Lager und eine Welle, vor, die in der noch nicht veröffentlichten Patentanmeldung DE 10 2005 0084254 der Anmelderin im Detail beschrieben ist. Der Offenbarungsgehalt betreffend die Anordnung und Montage wird hier ausdrücklich einbezogen.

Der funktionelle Ablauf der Feststellbremsbetätigung im Bremssattel 1 aus Fig. 1 wird im Folgenden dargelegt. Bei Betätigung der Feststellbremse wird über den Betätigungshebel 7 die Welle 5 und der Endabschnitt 8 gedreht und die Rampenanordnung 11 verdreht. Dadurch bewirken die beiden Rampenelementen 12 und 13 eine axiale Verschiebung der Welle 5 und des Endabschnitts 8. Diese axiale Verschiebung wird mittels des axialen Lagers 25 auf den Endabschnitt 22 bzw. auf die Spindel 21 übertragen. Da die Spindel 21 über die Verzahnung 30 des Endabschnitts 22 drehfest in der Patrone 31 geführt ist, vollzieht die Spindel 21 ausschließlich eine axiale Verschiebung ohne Rotation. Über die auf dem Schaft 23 aufgeschraubte Mutter 24 wird so der Kolben 3 bewegt und blockiert die nicht dagestellte Bremsscheibe.

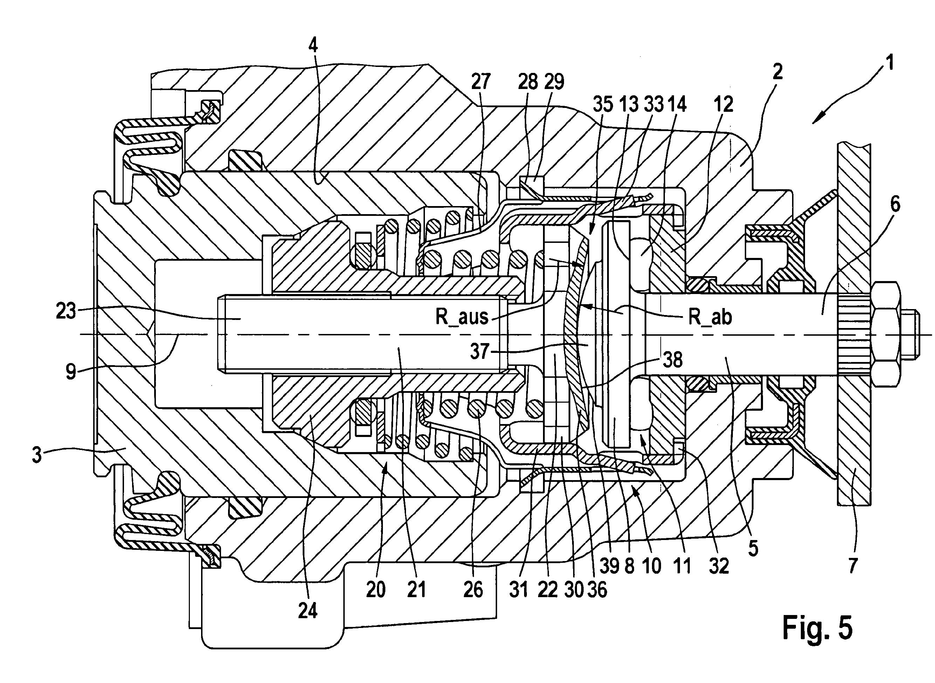

In Fig. 5 ist nur zur Erläuterung eine Schnittansicht eines Bremssattels mit Nachstell- und Betätigungsvorrichtung dargestellt. Darin wird die im Stand der Technik beschriebene Problematik der übermäßigen Bauteilbelastung der Patrone der Nachstellvorrichtung, bedingt durch die hohe Reibung im Gleitlager, umgangen, indem eine extrem reibungsarme Lagerung zur Anwendung kommt. Dabei wird eine Kalottenanordnung 35 verwendet, welche eine Kalottenschale 36 mit einer konkav gekrümmten Oberfläche 38 und einen Kalottenzapfen 37 mit einer konvex gekrümmten Oberfläche 39 umfasst.

Das Lager 35 ist derart realisiert, indem auf dem Endabschnitt 22 der Spindel 21 die Kalottenschale 36 vorgesehen ist, die zur Aufnahme des Kalottenzapfens 37 dient. Dieser Kalottenzapfen 37 ist auf der Stirnseite des Endabschnitts 8 der Welle 5 platziert. Dabei ist die axiale Oberfläche 39 des Kalottenzapfens 37 sphärisch ausgeführt und weist überall einen konstanten Abrundungsradius R_ab auf. Korrelierend dazu ist die aufnehmende Oberfläche 38 der Kalottenschale 36, in welcher der Kalottenzapfen 37 mit der sphärischen Oberfläche 39 aufliegt, auch mit einem konstantem Ausrundungsradius R_aus versehen. Damit der Kalottenzapfen 37 in die Kalottenschale 36 greifen kann, ist der Abrundungsradius R_ab des Kalottenzapfens 37 kleiner als der Ausrundungsradius R_aus der Kalottenschale 36, insbesondere beträgt der Abrundungsradius 89 Prozent der Größe des Ausrundungsradius, kann aber auch darunter liegen oder auf 95 % zunehmen. Je größer der Unterschied zwischen den Radien ist, desto geringer fällt die Reibung zwischen Zapfen 37 und Kalotte 36 aus, jedoch steigt damit die Flächenpressung im Kontaktpunkt.

### Bezugszeichenliste

- 1: Bremssattel
- 2: Gehäuse
- 3: Kolben
- 4: Bohrung
- 5: Welle
- 6: Wellenende
- 7: Betätigungshebel
- 8: Endabschnitt
- 9: Längsachse
- 10: Betätigungsvorrichtung
- 11: Rampenanordnung
- 12: gehäusefestes Rampenelement
- 13: drehbares Rampenelement
- 14: Wälzkörper
- 15: Gleitlagerscheibe
- 16: Nase
- 20: Nachstellvorrichtung
- 21: Spindel
- 22: Endabschnitt
- 23: Schaft
- 24: Mutter
- 25: Wälzlager
- 26: Feder
- 27: Federtopf
- 28: ausgestellte Lasche
- 29: Ausnehmung
- 30: Verzahnung
- 31: Patrone
- 32: Lasche
- 33: ausgestellte Lasche
- 34: Profil
- 35: Kalottenanordnung
- 36: Kalottenschale
- 37: Kalottenzapfen
- 38: konkave Oberfläche
- 39: konvexe Oberfläche

- R_ab: Abrundungsradius
- R_aus: Ausrundungsradius

## Patentansprüche

1. Bremssattel (1) einer Scheibenbremse, umfassend
- ein Gehäuse (2) mit einer Bohrung (4), in der ein Kolben (3) axial verschiebbar angeordnet ist,
- und eine Welle (5) zur Betätigung, die drehbar und axial verschiebbar gelagert ist und mit einem Wellenende (6) eine Gehäuseöffnung durchgreift,
- und zwei gegeneinander verdrehbare Rampenelemente (12, 13), von denen ein Rampenelement (12) drehfest mit dem Gehäuse und ein Rampenelement (13) drehfest mit der Welle verbunden ist,
- und eine Nachstellvorrichtung (20) mit einer Spindeln (21), wobei die Nachstellvorrichtung zwischen der Welle (6) und dem Kolben (3) vorhanden ist,
- und ein zwischen Spindel (21) und Welle (5) wirksames Axiallager (25),
**dadurch gekennzeichnet, dass**
- auf einem Umfang der Spindel (21) eine Verzahnung (30) vorgesehen ist,
- dass formschlüssige Aufnahmemittel für die Verzahnung (30) vorgesehen sind, und
- wobei diese Aufnahmemittel drehfest mit dem Gehäuse (2) verbunden sind und die Spindel (21) gegen Verdrehen sichern.

2. Bremssattel nach Anspruch 1, **dadurch gekennzeichnet, dass** die Verzahnung (30) und die Spindel (21) einstückig ausgeführt sind.

3. Bremssattel nach Anspruch 1 und 2, **dadurch gekennzeichnet, dass** die Zähne der Verzahnung (30) zur Bildung eines sternförmigen Querschnitts gleichförmig und umlaufend auf einem Endabschnitt (22) angebracht sind.

4. Bremssattel nach Anspruch 3, **dadurch gekennzeichnet, dass** die formschlüssigen Aufnahmemittel ein zum sternförmigen Querschnitt des Endabschnitts (22) negatives Profil (34) aufweisen.

5. Bremssattel nach Anspruch 1, **dadurch gekennzeichnet, dass** die Aufnahmemittel einstückig in einer Patrone (31) der Nachstellvorrichtung (20) ausgebildet sind.

6. Bremssattel nach Anspruch 5, **dadurch gekennzeichnet, dass** die Patrone (31) mittels spanloser Fertigungsverfahren, wie insbesondere mittels Prägen, Tiefziehen oder Pressen hergestellt ist.

7. Bremssattel nach Anspruch 1, **dadurch gekennzeichnet, dass** die Aufnahmemittel einstückig in einem Abschnitt der Bohrung (4) ausführt sind.

8. Bremssattel nach den Ansprüchen 4 und 5, **dadurch gekennzeichnet, dass** eine axial wirksame Gleitlagerscheibe (15) mindestens zwei gegenüberliegende Nasen (16) aufweist, wobei die Nasen (16) in das Profil (34) der Aufnahmemittel greifen und **dadurch** die Gleitlagerscheibe (15) zentriert ist.

9. Bremssattel nach einem oder mehreren vorangestellten Ansprüchen, **dadurch gekennzeichnet, dass** ein Federtopf (27) über ausgestellte Laschen (33) an der Patrone (31) fixiert ist, und die Patrone (31) mittels umgeformter Laschen (32) mit dem drehfesten Rampenelement (12) verbunden ist, so dass Patrone (31), Federtopf (27) und Rampenelement (12) eine Montageeinheit bilden.

## Claims

1. Brake calliper (1) of a disc brake, comprising
- a housing (2) with a bore (4), in which a piston (3) is arranged such that it can be displaced axially,
- and a shaft (5) for actuation which is mounted such that it can be displaced rotatably and axially and reaches through a housing opening with one shaft end (6),
- and two ramp elements (12, 13) which can be rotated with respect to one another and of which one ramp element (12) is connected in a rotationally fixed manner to the housing and one ramp element (13) is connected in a rotationally fixed manner to the shaft,
- and an adjusting apparatus (20) with a spindle (21), the adjusting apparatus being between the shaft (6) and the piston (3),
- and an axial bearing (25) which is active between the spindle (21) and the shaft (5),
**characterized in that**
- a toothing system (30) is provided on a circumference of the spindle (21),
- and **in that** positively locking receiving means are provided for the toothing system (30), and
- the said receiving means being connected in a rotationally fixed manner to the housing (2) and securing the spindle (21) against rotation.

2. Brake calliper according to Claim 1, **characterized in that** the toothing system (30) and the spindle (21) are configured in one piece.

3. Brake calliper according to Claims 1 and 2, **characterized in that** the teeth of the toothing system (30) are attached uniformly and circumferentially on an end section (22) in order to form a star-shaped cross section.

4. Brake calliper according to Claim 3, **characterized in that** the positively locking receiving means have a negative profile (34) with respect to the star-shaped cross section of the end section (22).

5. Brake calliper according to Claim 1, **characterized in that** the receiving means are configured in one piece in a cartridge (31) of the adjusting apparatus (20).

6. Brake calliper according to Claim 5, **characterized in that** the cartridge (31) is manufactured by means of processing methods without the removal of material, such as, in particular, by means of stamping, deep drawing or pressing.

7. Brake calliper according to Claim 1, **characterized in that** the receiving means are configured in one piece in a section of the bore (4).

8. Brake calliper according to Claims 4 and 5, **characterized in that** an axially active sliding bearing plate (15) has at least two lugs (16) which lie opposite one another, the lugs (16) engaging into the profile (34) of the receiving means and the sliding bearing plate (15) being centred as a result.

9. Brake calliper according to one or more of the preceding claims, **characterized in that** a spring pot (27) is fixed on the cartridge (31) via deployed tongues (33), and the cartridge (31) is connected to the rotationally fixed ramp element (12) by means of deformed tongues (32), with the result that the cartridge (31), the spring pot (27) and the ramp element (12) form one assembly unit.

## Revendications

1. Etrier (1) pour frein à disque, qui comprend :
un boîtier (2) doté d'un alésage (4) dans lequel un piston (3) est disposé de manière à pouvoir coulisser axialement,
un arbre d'actionnement (5) monté à coulissement rotatif et axial et dont une extrémité (6) traverse une ouverture du boîtier,
deux éléments en pente (12, 13) qui peuvent tourner l'un par rapport à l'autre, un élément en pente (12) étant relié au boîtier sans pouvoir tourner et un élément de pente (13) étant relié à rotation solidaire à l'arbre,
un dispositif (20) de réglage fin doté d'une broche (21), le dispositif de réglage fin étant prévu entre l'arbre (6) et le piston (3) et
un palier axial actif entre la broche (21) et l'arbre (5),
**caractérisé en ce que**
une denture (30) est prévue sur une périphérie de la broche (21),
des moyens de réception en correspondance géométrique sont prévus pour la denture (30) et
ces moyens de réception sont reliés au boîtier (2) sans pouvoir tourner et empêchent la broche (21) de tourner.

2. Etrier de frein selon la revendication 1, **caractérisé en ce que** la denture (30) et la broche (21) sont réalisées d'un seul tenant.

3. Etrier de frein selon les revendications 1 et 2, **caractérisé en ce que** les dents de la denture (30) ont tous la même forme, ont une section transversale en étoile et sont installés à la périphérie d'une partie d'extrémité (22).

4. Etrier de frein selon la revendication 3, **caractérisé en ce que** les moyens de réception en correspondance géométrique présentent un profil négatif (34) par rapport à la section transversale en étoile de la partie d'extrémité (22).

5. Etrier de frein selon la revendication 1, **caractérisé en ce que** les moyens de réception sont formés d'un seul tenant dans une cartouche (31) du dispositif (20) de réglage fin.

6. Etrier de frein selon la revendication 5, **caractérisé en ce que** la cartouche (31) est formée par un procédé de fabrication sans enlèvement de matière, en particulier par gaufrage, emboutissage ou pressage.

7. Etrier de frein selon la revendication 1, **caractérisé en ce que** les moyens de réception sont formés d'un seul tenant dans une partie de l'alésage (4).

8. Etrier de frein selon les revendications 4 et 5, **caractérisé en ce qu'**un disque (15) de palier coulissant actif axialement présente au moins deux ergots (16) opposés, les ergots (16) s'engageant dans le profil (34) des moyens de réception pour centrer le disque (15) de palier coulissant.

9. Etrier de frein selon l'une ou plusieurs des revendications précédentes, **caractérisé en ce qu'**un chapeau élastique (27) est fixé sur la cartouche (31) par des pattes (33) en débord et **en ce que** la cartouche (31) est reliée à l'élément (12) en pente empêchée de tourner au moyen de pattes (32) qui y sont formées, de telle sorte que la cartouche (31), le chapeau élastique (27) et l'élément (12) en pente forment une unité de montage.
